# EUROPÄISCHE PATENTSCHRIFT

(11) **EP 1 583 630 B1**
(45) Veröffentlichungstag und Bekanntmachung des Hinweises auf die Patenterteilung: **25.10.2006**
(21) Anmeldenummer: 03785819.8
(22) Anmeldetag: 15.12.2003
(51) Int. Cl.: B23H 9/10, B23H 9/14

(54) **VERFAHREN ZUR ERZEUGUNG EINES LOCHS**
METHOD FOR PRODUCTION OF A HOLE
PROCEDE POUR PRODUIRE UN TROU

(30) Priorität: 13.01.2003 EP 03000754
(43) Veröffentlichungstag der Anmeldung: 12.10.2005
(73) Patentinhaber: SIEMENS AKTIENGESELLSCHAFT, 80333 München (DE); Settegast, Silke, 10439 Berlin (DE)
(72) Erfinder: DAUS, Nikolai, Alexander, 10439 Berlin (DE); SPERLICH, Kathrin, 13349 Berlin (DE)
(86) Internationale Anmeldenummer: PCT/EP2003/014256
(87) Internationale Veröffentlichungsnummer: WO 2004/062841

(56) Entgegenhaltungen:
- US-A- 4 818 834
- US-B1- 6 210 488

## Beschreibung

Die Erfindung betrifft ein Verfahren zur Erzeugung eines Lochs in einem Bauteil, das aus einem Substrat und zumindest einer Schicht besteht nach dem Oberbegriff des Anspruchs 1.

Ein derartiges Verfahren ist aus Dokument US4818834 bekannt.

Zahlreiche Bauteile, zum Beispiel Bauteile für Gasturbinen wie Turbinenlauf- und -leitschaufeln, weisen oft ein Schichtsystem auf. Das Schichtsystem besteht beispielsweise aus einem metallischen Substrat, etwa aus einer nickel- oder kobaltbasierten Superlegierung, und zumindest einer darauf aufgebrachten Schicht wie zum Beispiel einer metallischen MCrAlY-Schicht und einer darüber angeordneten keramischen Wärmedämmschicht.

Nach der Herstellung des Bauteils mit den Schichten ist es oft notwendig, Löcher, insbesondere Durchgangslöcher, wie z.B. Kühlluftbohrungen durch Substrat und Schichten zu erzeugen.

Dazu können verschiedene Verfahren wie z.B. laserunterstützte Bohrprozesse verwendet werden.

Dabei kommt es jedoch vielfach zu Problemen durch eine hohe thermische Belastung des Bauteils infolge einer nicht lokalen Werkstoffaufschmelzung, welches zu Werkstoffschädigungen führt.

Es ist bekannt, metallische Bauteile, die eine hinreichend hohe elektrische Leitfähigkeit aufweisen müssen, mittels Funkenerosion zu bearbeiten. Bei Werkstoffen mit sehr geringer elektrischer Leitfähigkeit, z. B. bei keramischen Werkstoffen ist dieses Verfahren aber nicht anwendbar.

Es ist daher Aufgabe der Erfindung, Werkstoffschädigungen bei der Erzeugung von Löchern in Bauteilen, die ein Substrat mit hoher elektrischer Leitfähigkeit aufweisen und mit einer Beschichtung von geringer elektrischer Leitfähigkeit versehen sind, zu vermeiden.

Die Aufgabe wird gelöst durch ein Verfahren gemäß Anspruch 1.

In den Unteransprüchen sind weitere vorteilhafte Verfahrensschritte aufgelistet.
Die in den Unteransprüchen aufgelisteten Verfahrensschritte können in vorteilhafter Art und Weise miteinander kombiniert werden.

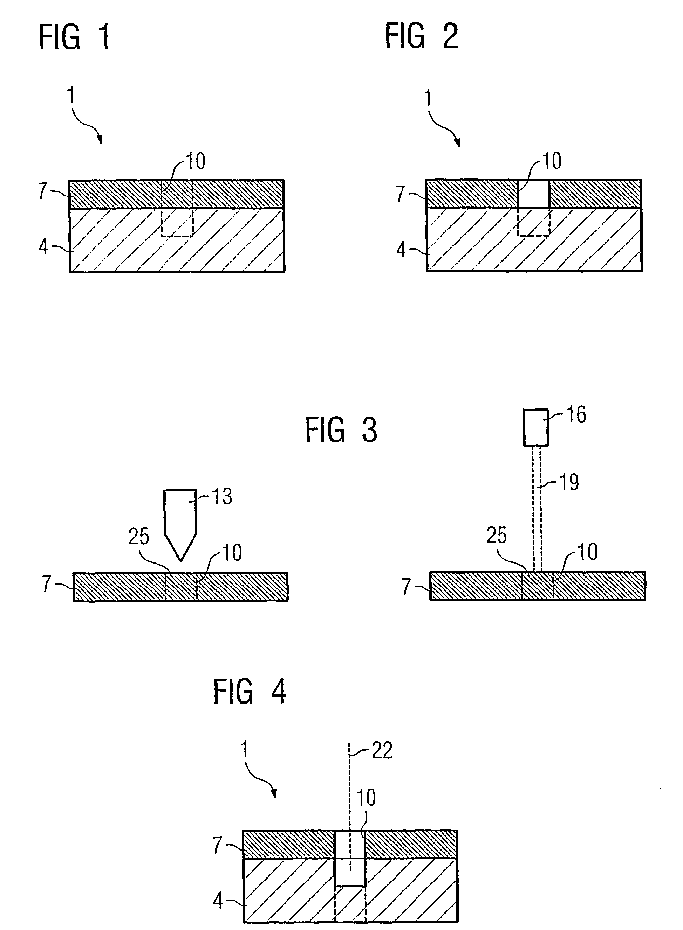

Es zeigen
Figur 1, 2, 3 und 4 ein Bauteil 1 in verschiedenen Verfahrensschritten eines erfindungsgemäßen Verfahrens.

Figur 1 zeigt ein Bauteil 1, das aus einem metallischen Substrat 4 mit einer hohen elektrischen Leitfähigkeit besteht. Auf dem metallischen Substrat 4 ist zumindest eine Schicht 7 vorhanden, die eine geringe elektrische Leitfähigkeit aufweist. Dies sind insbesondere keramische Schichten (Wärmedämmschicht, hergestellt durch Plasmaspritzen, atmosphärisch oder im Vakuum (APS, VPS,...)). Es kann auch eine Oxidschicht oder Korrosionsschicht auf dem Substrat 1 sein, die sich während des Einsatzes des metallischen Bauteils 1 gebildet haben.

Es können aber auch beispielsweise zwei Schichten auf dem Substrat vorhanden sein: Eine innere metallische Schicht (MCrAlY) mit einer hohen elektrischen Leitfähigkeit unmittelbar auf dem metallischen Substrat und darüber eine äussere bspw. keramische Schicht mit geringer elektrischer Leitfähigkeit.

Geringe elektrische Leitfähigkeit bedeutet in diesem Zusammenhang, dass das Material der Schicht (keramische Schicht) nicht mittels Funkenerosion bearbeitet werden kann.
Hohe elektrische Leitfähigkeit bedeutet in diesem Zusammenhang, dass das Material des Substrats 4 oder der MCrAlY-Schicht mittels Funkenerosion bearbeitet werden kann.

In Figur 1 ist ein Loch 10, das in dem Bauteil 1 erzeugt werden soll, gestrichelt angedeutet. Das Loch 10 erstreckt sich in seiner Tiefe durch die äußere Schicht 7 in das metallische Substrat 4 hinein, also durch zwei Bereiche mit deutlich unterschiedlicher elektrischer Leitfähigkeit.

Figur 2 zeigt das Bauteil 1 aus Figur 1 in einem weiteren Verfahrensschritt.
In einem weiteren Verfahrensschritt wurde Material der Schicht 7 an der Stelle entfernt, wo das Loch 10 entstehen soll. Ein erster Teil des Lochs 10 ist damit erzeugt und erstreckt sich zumindest teilweise durch die Schicht 7 und erstreckt sich möglichst bis zum Substrat 4.
Der erste Teil des Lochs 10 in einer solchen Schicht 7 kann nicht mit einem Funkenerosionsverfahren erzeugt werden.

Figur 3 offenbart zwei Möglichkeiten, um Material der Schicht 7 zu entfernen.
Der Bereich der Schicht 7, der Teil des Lochs 10 werden soll, ist mit den Bezugszeichen 25 gekennzeichnet. Das Material des Bereichs 25 kann, wie im linken Teil der Figur 3 dargestellt ist, beispielsweise durch einen Indenter 13, wie er bspw. von Härteprüfverfahren bekannt ist, erzeugt werden.

Der Indenter 13 ist zumindest an der Spitze, die mit der Schicht 7 zuerst in Berührung kommt, kegelförmig ausgebildet. Die Krafteinwirkung des Indenters 13 auf die Schicht 7 erfolgt statisch oder dynamisch.
Der Bereich 25 kann sich auch teilweise in das in Figur 3 nicht dargestellte Substrat 4 erstrecken.

Ebenso ist es möglich, mittels eines von einem Laser 16 (rechter Teil der Figur 3) erzeugten Laserstrahls 19 das Material aus dem Bereich 25 zu entfernen.

Weitere Verfahren wie zum Beispiel Sandstrahlen oder Hochdruckwasserstrahlen sind denkbar, um Material lokal aus dem Bereich 25 zu entfernen. In jedem Fall handelt es sich um Verfahren, bei denen die elektrische Leitfähigkeit nicht hoch sein muss, d. h. beispielsweise um mechanische Verfahren oder Verfahren mit Hochenergiestrahlen.

Figur 4 zeigt ein Bauteil 1 ausgehend von Figur 3, bei dem Material aus dem Substrat 4 entfernt wird, nachdem in einem ersten Schritt Material aus der Schicht 7 entfernt wurde.
Das Material, das aus dem Substrat 4 für die Bildung des Lochs 10 in einem zweiten Schritt entfernt werden muss, wird mittels Funkenerosion entfernt, da die elektrische Leitfähigkeit des Material des Substrats 4 ausreichend hoch genug ist.
Dazu wird beispielsweise ein Elektrode, insbesondere eine rotationssymmetrische, oder ein Funkenerosionsdraht 22 verwendet. Die Elektrode oder Draht sind bspw. zumindest teilweise im Loch 10 angeordnet ist.
Mittels der Funkenerosion lassen sich hochgenaue Löcher erzeugen. Aufgrund der sehr lokalen, d. h. sehr eng begrenzten Werkstoffaufschmelzung kommt es bei diesem Verfahren nicht oder allenfalls nur zu sehr geringen Werkstoffschädigungen.

Es kann, wie in Figur 4, ein Sackloch 10 erzeugt werden oder wie gestrichelt angedeutet, ein Durchgangsloch 10 (Filmkühlbohrung) erzeugt werden.

Das Loch 10 wird also mittels zwei verschiedener Verfahren hergestellt.

## Patentansprüche

1. Verfahren zur Erzeugung eines Lochs (10)
in einem Bauteil (1),
das aus einem Substrat (4),
welches eine elektrische Leitfähigkeit aufweist,
die für eine Bearbeitung mittels eines Funkenerosionsverfahrens ausreichend hoch genug ist,
und zumindest einer Schicht (7) besteht,
die eine elektrische Leitfähigkeit aufweist,
die für eine Bearbeitung mittels eines Funkenerosionsverfahrens nicht ausreicht,
**dadurch gekennzeichnet dass**
in einem ersten Verfahrensschritt ein mechanisches Verfahren angewendet wird,
um Material der Schicht (7) für die Erzeugung des Lochs (10) zu entfernen.
wodurch ein erster Teil des Lochs (10) erzeugt wird,
und dann eine funkenerosive Bearbeitung des Substrats (4) zur weiteren Erzeugung des Lochs (10) erfolgt.

2. Verfahren nach Anspruch 1,
**dadurch gekennzeichnet, dass**
als mechanisches Verfahren ein zumindest teilweise kegelförmiger Indenter (13) verwendet wird,
um Material der Schicht (7) für die Erzeugung des Lochs (10) zu entfernen.

3. Verfahren nach Anspruch 1,
**dadurch gekennzeichnet, dass**
als mechanisches Verfahren Sandstrahlen verwendet wird, um Material der Schicht (7) für die Erzeugung des Lochs (10) zu entfernen.

4. Verfahren nach Anspruch 1,
**dadurch gekennzeichnet, dass**
als mechanisches Verfahren ein Hochdruck-Wasserstrahl verwendet wird,
um Material der Schicht (7) für die Erzeugung des Lochs (10) zu entfernen.

5. Verfahren nach Anspruch 1, 2 oder 3,
**dadurch gekennzeichnet, dass**
das Material der Schicht (7) zumindest bis zum Substrat (4) hin entfernt wird.

6. Verfahren nach Anspruch 1,
**dadurch gekennzeichnet, dass**
das Loch (10) als Sackloch hergestellt wird.

7. Verfahren nach Anspruch 1,
**dadurch gekennzeichnet, dass**
das Loch (10) als Durchgangsloch hergestellt wird.

8. Verfahren nach Anspruch 1,
**dadurch gekennzeichnet, dass**
ein Bauteil (1) eingesetzt wird, bei dem das Material der Schicht (7) zumindest teilweise keramisch ist.

## Claims

1. Method for generating a hole (10) in a component (1), which consists of a substrate (4) having an electrical conductivity which is sufficiently high for processing by means of a spark erosion method, and at least one layer (7) having an electrical conductivity which is insufficient for processing by means of a spark erosion method, **characterized in that** a mechanical method is used in a first method step in order to remove material of the layer (7) for generating the hole (10), so that a first part of the hole (10) is generated, and then spark-erosive processing of the substrate (4) is carried out in order to further generate the hole (10).

2. Method according to Claim 1, **characterized in that** an at least partially conical indenter (13) is used as the mechanical method in order to remove material of the layer (7) for generating the hole (10).

3. Method according to Claim 1, **characterized in that** sandblasting is used as the mechanical method in order to remove material of the layer (7) for generating the hole (10).

4. Method according to Claim 1, **characterized in that** a high-pressure water jet is used as the mechanical method in order to remove material of the layer (7) for generating the hole (10).

5. Method according to Claim 1, 2 or 3, **characterized in that** the material of the layer (7) is removed at least down to the substrate (4).

6. Method according to Claim 1, **characterized in that** the hole (10) is produced as a blind hole.

7. Method according to Claim 1, **characterized in that** the hole (10) is produced as a through-hole.

8. Method according to Claim 1, **characterized in that** a component (1) in which the material of the layer (7) is at least partially ceramic is used.

## Revendications

1. Procédé de production d'un trou (10)
dans un composant (1),
qui est constitué d'un substrat (4),
qui a une conductivité électrique,
qui est suffisamment grande pour un usinage au moyen d'un procédé d'usinage par étincelage,
et d'au moins une couche (7),
qui a une conductivité électrique,
qui ne suffit pas pour un usinage au moyen d'un procédé d'usinage par étincelage,
**caractérisé en ce que**
l'on utilise dans un premier stade du procédé un procédé mécanique,
pour enlever de la matière de la couche (7) pour la production du trou (10),
en produisant ainsi une première partie du trou (10)
et l'on effectue ensuite un usinage par étincelage du substrat (4) pour continuer à produire le trou (10).

2. Procédé suivant la revendication 1,
**caractérisé en ce que**
l'on utilise comme procédé mécanique un pénétrateur (13) au moins en partie conique,
pour éliminer de la matière de la couche (7) pour la production du trou (10).

3. Procédé suivant la revendication 1,
**caractérisé en ce que**
l'on utilise comme procédé mécanique un sablage pour éliminer de la matière de la couche (7) pour la production du trou (10).

4. Procédé suivant la revendication 1,
**caractérisé en ce que**
l'on utilise comme procédé mécanique un jet d'eau sous haute pression,
pour éliminer de la matière de la couche (7) pour la production du trou (10).

5. Procédé suivant la revendication 1, 2 ou 3,
**caractérisé en ce que**
l'on élimine la matière de la couche (7) au moins jusqu'au substrat (4).

6. Procédé suivant la revendication 1,
**caractérisé en ce que**
l'on produit le trou (10) sous la forme d'un trou borgne.

7. Procédé suivant la revendication 1,
**caractérisé en ce que**
l'on produit le trou (10) sous la forme d'un trou traversant.

8. Procédé suivant la revendication 1,
**caractérisé en ce que**
l'on utilise un composant (1),
dans lequel la matière de la couche (7) est au moins en partie céramique.
